# EUROPEAN PATENT SPECIFICATION

(11) **EP 2 896 449 B1**
(45) Date of publication and mention of the grant of the patent: **04.10.2017**
(21) Application number: 13836745.3
(22) Date of filing: 22.08.2013
(51) Int. Cl.: B01D 53/64, B01D 53/50, B01D 53/96, B01D 53/86

(54) **SYSTEM FOR PROCESSING EXHAUST GAS, AND METHOD FOR PROCESSING EXHAUST GAS**
ABGASVERARBEITUNGSVORRICHTUNG UND ABGASVERARBEITUNGSSYSTEM
SYSTÈME DE TRAITEMENT DE GAZ D'ÉCHAPPEMENT ET PROCÉDÉ DE TRAITEMENT DE GAZ D'ÉCHAPPEMENT

(30) Priority: 14.09.2012 US 201213618640
(43) Date of publication of application: 22.07.2015
(73) Proprietor: Mitsubishi Hitachi Power Systems, Ltd., Yokohama 220-8401 (JP)
(72) Inventor: HONJO, Shintaro, New York, New York 10111 (US); ITO, Motofumi, New York, New York 10111 (US); SUGITA, Satoru, New York, New York 10111 (US); INABA, Norikazu, New York, New York 10111 (US); HASHIMOTO, Jun, New York, New York 10111 (US); OKINO, Susumu, Tokyo 108-8215 (JP); OKAMOTO, Takuya, Tokyo 108-8215 (JP)
(74) Representative: Studio Torta S.p.A.
(86) International application number: PCT/JP2013/072362
(87) International publication number: WO 2014/041980

(56) References cited:
- JP-A- 2004 313 833
- JP-A- 2012 011 317

## Description

### Technical Field

The present invention relates to a flue gas treatment system and a flue gas treatment method for removing nitrogen oxide and mercury contained in flue gas.

### Background Art

Flue gas produced during burning of coal or heavy oil contains dust, sulfur oxides (SOx), nitrogen oxides (NOx), mercury (Hg) and the like. In recent years, a device and a method for treating mercury with a combination of a deNOx device for reducing NOx and a wet-type desulfurization device for removing SOx by an alkali absorbent has been studied.

As a method for treating mercury in high-temperature flue gas, a system by which mercury is oxidized (halogenated) to form water-soluble mercury chloride while NOx is reduced by a selective catalytic reduction (SCR) catalyst in a deNOx device, and then, the mercury chloride is removed by a wet-type desulfurization device on the downstream side is proposed. As a NOx reducing agent and a mercury oxidizing agent, ammonium chloride (NH₄Cl) that generates NH₃ and HCl when being vaporized is used.

However, since equal amounts of NH₃ gas and HCl gas are generated by sublimation of NH₄Cl, a ratio of the amount of NH₃ gas and HCl gas to be generated cannot be controlled. Depending on properties of flue gas, the amount of NH₃ required to remove NOx and the amount of HCl required to remove mercury are not always 1:1. That is, the problem is that either of them is excessive or insufficient (see, for example, JP2012011317)

In a mercury removing system of Patent Literatures 1 to 3, spraying means for spraying NH₄Cl is provided on the upstream side of a deNOx device, and spraying means for spraying NH₃ and spraying means for spraying hydrogen halide (HCl or the like) are separately provided. According to such a configuration, a NOx reducing agent and a mercury oxidizing agent can be simultaneously supplied to flue gas at an arbitrary rate based on properties of the flue gas.

### Citation List

### Patent Literature

{PTL 1} PCT International Publication No. WO 2010/146670
{PTL 2} PCT International Publication No. WO 2010/146671
{PTL 3} PCT International Publication No. WO 2010/146672

### Summary of Invention

### Technical Problem

A conventional mercury removing system as described in Patent Literatures 1 to 3 requires high operating cost because a NOx reducing agent and a mercury oxidizing agent such as NH₄Cl need to be supplied from outside the system.

In addition, since hydrogen halide (HCl or the like) is captured by a desulfurization device in the conventional mercury removing system, a Cl concentration of an alkali absorbent in the desulfurization device increases, and thereby performance of the desulfurization device is affected and members thereof are corroded. Therefore, an amount of waste water from the desulfurization device needs to be increased and a large amount of cost is required for drainage treatment. Furthermore, when a lime-gypsum method is used as a desulfurization method, waste water from the desulfurization device contains calcium halide (CaCl₂ or the like). When a treatment method for forming sludge by evaporation to dryness of the waste water from the desulfurization device is applied, calcium halide may be leached from the sludge because calcium halide such as CaCl₂ is readily soluble in water.

It is an object of the present invention to provide a flue gas treatment system and a flue gas treatment method capable of reducing operating cost and drastically reducing an amount of waste water from the system. Moreover, it is another object of the present invention to provide a flue gas treatment system and a flue gas treatment method capable of controlling an amount of a NOx reducing agent and a mercury oxidizing agent to be supplied based on properties of flue gas.

### Solution to Problem

According to a first aspect of the present invention, a flue gas treatment system for removing nitrogen oxide and mercury contained in flue gas from a boiler includes a spray section adapted to spray an aqueous solution containing ammonium halide into a flue through which the flue gas discharged from the boiler flows, a deNOx section placed on a gas downstream side of the flue and adapted to reduce the nitrogen oxide with ammonia generated from the ammonium halide and to oxidize the mercury with hydrogen halide generated from the ammonium halide, a desulfurization section placed on a gas downstream side of the deNOx section and adapted to remove sulfur oxide contained in the flue gas and to remove the oxidized mercury from the flue gas by using an absorbent containing alkali compounds, a separation section adapted to receive waste water containing calcium sulfate and calcium halide from the desulfurization section and to separate the calcium sulfate from the waste water, an ammonia component addition section adapted to add an ammonium salt which is at least one of ammonium sulfate and ammonium carbonate to the waste water containing the calcium halide discharged from the separation section to generate the ammonium halide, and a supply section adapted to send the waste water containing the ammonium halide discharged from the ammonia component addition section to the spray section as the aqueous solution.

According to a second aspect of the present invention, a flue gas treatment method for removing nitrogen oxide and mercury contained in flue gas from a boiler includes a spray step for spraying an aqueous solution containing ammonium halide into a flue through which the flue gas discharged from the boiler flows, an oxidation-reduction step for reducing the nitrogen oxide with ammonia generated from the ammonium halide and oxidizing the mercury with hydrogen halide generated from the ammonium halide, a desulfurization step for generating calcium sulfate and calcium halide by a reaction among an absorbent containing alkali compounds, sulfur oxide contained in the flue gas, and the hydrogen halide and for removing the oxidized mercury from the flue gas by the absorbent, a separation step for separating the calcium sulfate from waste water containing the calcium sulfate and the calcium halide which are generated in the desulfurization step, an ammonium halide generation step for generating the ammonium halide by adding an ammonium salt which is at least one of ammonium sulfate and ammonium carbonate to the waste water from which the calcium sulfate is separated in the separation step, and a supply step for sending the waste water containing the ammonium halide as the aqueous solution.

In the present invention, the ammonium halide (NH₄X) is used for reduction of the nitrogen oxide and oxidation of the mercury which are contained in the flue gas. The solid calcium sulfate (CaSO₄) is separated and removed from the waste water containing the components generated by the desulfurization step in the desulfurization section. By adding at least one of ammonium sulfate ((NH₄)₂SO₄) and ammonium carbonate ((NH₄)₂CO₃) to the waste water after separating CaSO₄, NH₄X is reclaimed from the waste water and is used for the reduction of the nitrogen oxide and the oxidation of the mercury. Thus, in the flue gas treatment system of the present invention, it is not necessary to constantly supply NH₄X from outside the system as the conventional technology, and the operating cost is reduced.

In the flue gas treatment system of the present invention, since a large amount of the waste water is not drained to outside the system, cost of drainage treatment can be reduced. In addition, CaSO₄ or CaCO₃ having low solubility is generated by reacting the calcium halide which is readily soluble in water with the ammonium sulfate and the ammonium carbonate, and is recovered in the solid state. Therefore, the treatment can be simplified.

In the first aspect and the second aspect, preferably, the aqueous solution contains the ammonium salt.

Owing to general flue gas properties and improvements in mercury oxidation performance by a deNOx catalyst of recent years, a concentration of hydrogen halide required for flue gas treatment is often lower than a concentration of ammonia.

In the flue gas treatment system and the flue gas treatment method of the present invention, NH₄X generated from the waste water from the desulfurization section is sprayed into the flue, and a surplus amount of the ammonium sulfate and/or the ammonium carbonate more than necessary to generate NH₄X is added.

In the first aspect, preferably, a first concentration measurement section adapted to measure a concentration of the nitrogen oxide in the flue gas on a gas upstream side of the spray section, a second concentration measurement section adapted to measure a concentration of the mercury in the flue gas on the gas downstream side of the desulfurization section, a third concentration measurement section adapted to measure a first halogen concentration which is a concentration of halogen and a concentration of ammonium in the waste water sent to the spray section from the supply section, a waste water store section placed between the separation section and the ammonia component addition section, connected to the desulfurization section, and adapted to store the waste water discharged from the separation section, a fourth concentration measurement section adapted to measure a second halogen concentration which is a concentration of halogen in the waste water stored in the waste water store section, and a control section connected to the first concentration measurement section, the second concentration measurement section, the third concentration measurement section, and the fourth concentration measurement section, and adapted to regulate an amount of the ammonium to be generated and an amount of the hydrogen halide to be generated based on the concentration of the nitrogen oxide, the concentration of the mercury, the concentration of the ammonium, the first halogen concentration, and the second halogen concentration measured are included.

In the second aspect, preferably, a first concentration measurement step for measuring a concentration of the nitrogen oxide in the flue gas before spraying the aqueous solution, a second concentration measurement step for measuring a concentration of the mercury in the flue gas after the desulfurization step, a third concentration measurement step for measuring a first halogen concentration which is a concentration of halogen and a concentration of ammonium in the waste water which is sent in the supply step, and a fourth concentration measurement step for measuring a second halogen concentration which is a concentration of halogen in the waste water from which the calcium sulfate is separated in the separation step are further included, and an amount of the ammonium to be generated and an amount of the hydrogen halide to be generated are regulated based on the concentration of the nitrogen oxide, the concentration of the mercury, the concentration of the ammonium, the first halogen concentration, and the second halogen concentration measured.

In the second aspect, preferably, an amount of the aqueous solution to be supplied in the supply step is increased or decreased based on the first halogen concentration and the concentration of the ammonium in accordance with variations in the concentration of the nitrogen oxide and the concentration of the mercury.

In the second aspect, preferably, an amount of the ammonium salt to be added is increased or decreased in accordance with variations in the concentration of the nitrogen oxide and the concentration of the mercury.

In the second aspect, preferably, an amount of the waste water to be supplied from the separation step to the ammonium halide generation step is varied based on the second halogen concentration in accordance with variations in the concentration of the nitrogen oxide and the concentration of the mercury.

As described above, in the flue gas treatment system and the flue gas treatment method of the present invention, the amount of the ammonium salt (ammonium sulfate, ammonium carbonate) and the ammonium halide (NH₄X) supplied to the flue can be controlled based on the nitrogen oxide concentration measured by the first concentration measurement section, the mercury concentration measured by the second concentration measurement section, the NH₄⁺ concentration and the halogen ion (X⁻) concentration measured by the third concentration measurement section, and the halogen concentration measured by the fourth concentration measurement section. The ammonium sulfate, the ammonium carbonate, and the ammonium halide supplied are decomposed into NH₃ gas and SO₃ gas, NH₃ gas and CO₃ gas, and NH₃ gas and HX gas, respectively. Thus, a supply ratio between NH₃ and HX and the amount thereof supplied to the flue can be regulated by adding the amount of NH₄X generated from the desulfurized waste water and the surplus amount of the ammonium salt more than necessary to generate NH₄X. Therefore, based on gas properties, the amount of NH₃ and the amount of HX to be supplied required for the reduction of the nitrogen oxide and the oxidation of the mercury can be regulated, respectively.

### Advantageous Effects of Invention

According to the present invention, the ammonium halide is produced from the waste water generated in the desulfurization device and the desulfurization step, and the ammonium halide is used for reducing NOx and oxidizing the mercury. Thus, in the present invention, the halogen is circulated in the system, and it is not necessary to discharge the waste water from the desulfurization device to outside the system. Therefore, the operating cost can be drastically reduced compared to the conventional system.

Moreover, according to the present invention, the ammonia and the hydrogen halide can be supplied with a ratio therebetween regulated while circulating the halogen in the system.

### Brief Description of Drawings

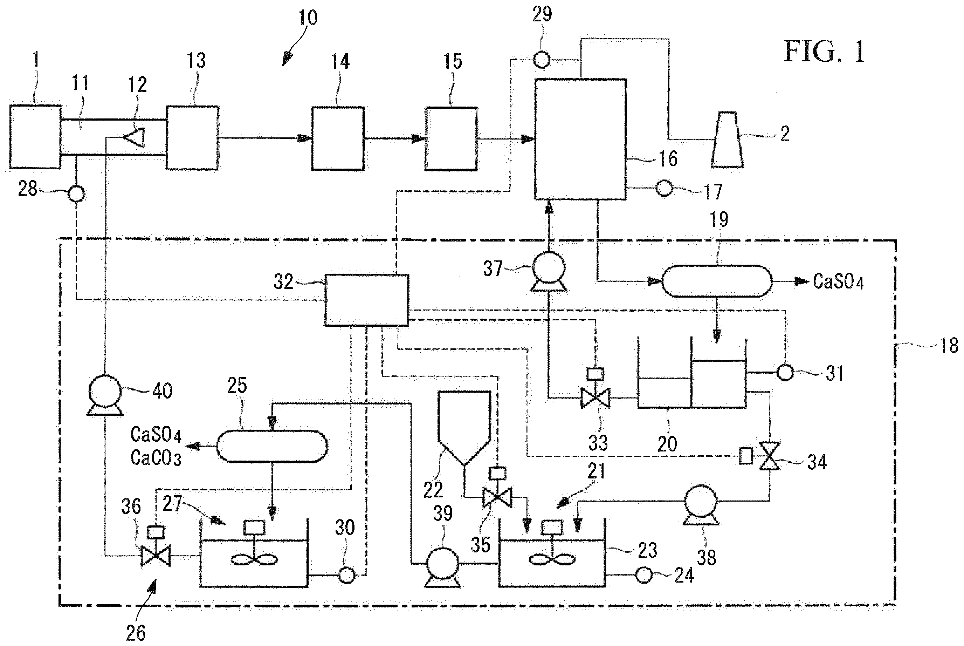

{Fig. 1}
Fig. 1 is a schematic view of a flue gas treatment system according to one embodiment of the present invention.

### Description of Embodiments

Fig. 1 is a schematic view of a flue gas treatment system according to one embodiment of the present invention. A flue gas treatment system 10 is placed on the gas downstream side of a boiler 1. The boiler 1 is combustion equipment which uses coal or heavy oil as fuel.

The flue gas treatment system 10 includes a deNOx device (deNOx section) 13 having a deNOx catalyst therein, an air heater 14 for heat-exchanging flue gas, a particulate control device 15 for removing dust in the flue gas, a wet-type desulfurization device (desulfurization section) 16, and a circulation section 18 in order from the flue gas upstream side. A smokestack 2 is placed on the gas downstream side of the wet-type desulfurization device 16.

A spray section 12 for spraying an aqueous solution containing ammonium halide as a reduction-oxidation auxiliary agent (aqueous ammonium halide solution) into the flue gas is placed in a flue 11 between the boiler 1 and the deNOx device 13. The spray section 12 is composed of a nozzle in the flue 11, an aqueous ammonium halide solution feed pipe inserted into the flue 11, and an air feed pipe for feeding air used for compressing and spraying the aqueous ammonium halide solution. Preferably, a two-fluid nozzle is used in the present embodiment. Multiple nozzles may be placed in the flue 11.

As the wet-type desulfurization device 16 in the present embodiment, a desulfurization device using a wet lime-gypsum process as a method for removing sulfur oxides (SO₂, SO₃) contained in the flue gas is used. A sulfur oxide absorbing agent in the wet lime-gypsum process is CaO (lime) or CaCO₃ (limestone), and is mixed with water to form Ca(OH)₂ or CaCO₃ slurry. The wet-type desulfurization device 16 includes an absorbing agent spray for spraying an aqueous solution containing the sulfur oxide absorbing agent and a store section provided below the spray. The store section stores gypsum slurry containing the absorbing agent and CaSO₄ (gypsum) which is a reaction product in the wet-type desulfurization device 16. The wet-type desulfurization device 16 is configured such that the gypsum slurry stored in the store section is circulated to the absorbing agent spray. A supersaturation measurement device 17 is connected to the wet-type desulfurization device 16.

The circulation section 18 generates the aqueous ammonium halide solution from the gypsum slurry stored in the store section of the wet-type desulfurization device 16, and supplies the aqueous ammonium halide solution to the spray section 12.

The circulation section 18 includes a first separation section 19, a waste water store section 20, an ammonia component addition section 21, and a supply section 26.

The first separation section 19 receives the gypsum slurry (waste water) stored in the store section of the wet-type desulfurization device 16. The first separation section 19 is a gypsum separator. The first separation section 19 separates hardly-soluble CaSO₄ from the waste water.

The waste water after separating CaSO₄ is temporarily stored in the waste water store section 20. The waste water store section 20 has a dual tank structure. One tank is connected to the ammonia component addition section 21 through a valve 34 and a pump 38. The other tank is connected to the wet-type desulfurization device 16 through a valve 33 and a pump 37.

The ammonia component addition section 21 receives the waste water from the waste water store section 20. The ammonia component addition section 21 includes a silo 22 containing therein ammonium sulfate ((NH₄)₂SO₄) or ammonium carbonate ((NH₄)₂CO₃) as an ammonium salt, and a water tank 23 for receiving the waste water. A valve 35 is placed in a path between the silo 22 and the water tank 23. In the case where both of the ammonium sulfate and the ammonium carbonate are added to the waste water, two silos 22 are placed, and the ammonium sulfate and the ammonium carbonate are contained in the respective silos. A pH meter 24 is placed in the water tank 23.

The waste water from the ammonia component addition section 21 is sent to the supply section 26 via a second separation section 25. The second separator 25 is a gypsum separator.

The supply section 26 includes a water tank 27, a valve 36, and a pump 40. The water tank 27 of the supply section 26 is connected to the aqueous ammonium halide solution feed pipe of the spray section 12 via the valve 36 and the pump 40.

The flue gas treatment system 10 includes a control section 32. The control section 32 is a computer, for example. The control section 32 is connected to the valves 33, 34, 35, and 36.

A NOx concentration measurement section (first concentration measurement section) 28 for measuring a nitrogen oxide concentration in the flue gas is placed in the flue 11 between the boiler 1 and the deNOx device 13. The NOx concentration measurement section 28 is placed on the gas upstream side of the spray section 12. The NOx concentration measurement section 28 is a continuous measuring instrument using a chemiluminescent method. The NOx concentration measurement section 28 is connected to the control section 32.

A mercury concentration measurement section (second concentration measurement section) 29 for measuring a mercury gas concentration in the flue gas after treatment is connected to a flue on the exit side of the wet-type desulfurization device 16. A concrete example of the mercury concentration measurement section 29 includes a continuous measuring instrument using an atomic absorption method. The mercury concentration measurement section 29 is connected to the control section 32.

An NH₄X concentration measurement section (third concentration measurement section) 30 for measuring an NH₄⁺ concentration and a halogen (X⁻) concentration in the water tank 27 is connected to the water tank 27 of the supply section 26. The NH₄X concentration measurement section 30 is a device for measuring the NH₄⁺ concentration and the X⁻concentration in the waste water by respective ion electrodes to obtain an NH₄X concentration and a surplus NH₄⁺ concentration in the waste water. The NH₄X concentration measurement section 30 is connected to the control section 32.

A halogen concentration measurement section (fourth concentration measurement section) 31 for measuring a halogen concentration in the waste water is connected to the waste water store section 20. A concrete example of the halogen concentration measurement section 31 includes a halogen ion electrode or the like. Preferably, the halogen concentration measurement section 31 continuously measures the halogen concentration. The halogen concentration measurement section 31 is connected to the control section 32.

A flue gas treatment method according to the present embodiment will be described with reference to Fig. 1.

The flue gas produced in the boiler 1 contains nitrogen oxides (NOx), sulfur oxides (SOx), and mercury (Hg). A temperature of the flue gas to be transferred into the flue gas treatment system 10 from the boiler 1 is 320 to 420°C, and the mercury exists in the gas state.

### (Spray Step)

The spray section 12 sprays the aqueous solution containing ammonium halide (NH₄X) into the flue 11 between the boiler 1 and the deNOx device 13. The ammonium halide which can be used in the present embodiment includes ammonium fluoride (NH₄F) , ammonium chloride (NH₄Cl), ammonium bromide (NH₄Br), and ammonium iodide (NH₄I) . The aqueous ammonium halide solution sprayed into the flue 11 is evaporated by the high-temperature flue gas to temporarily generate minute solid particles of NH₄X, and is decomposed into hydrogen halide and ammonia as expressed by formula (1).

NH₄X → NH₃ + HX (1)

(X: F, Cl, Br, I)

Preferably, a diameter of droplets sprayed from the two-fluid nozzle of the spray section 12 is approximately an average of 1 nm to 100 µm because the evaporation and the decomposition of droplets occur in a short time.

### (Oxidation-Reduction Step)

The generated NH₃ and HX are transferred into the deNOx device 13 together with the flue gas. The nitrogen oxides are reduced with NH₃ by the deNOx catalyst of the deNOx device 13. In the case of NO, NO is reduced as expressed by a reaction formula of formula (2) to generate N₂.

4NO + 4NH₃ + O₂ → 4N₂ + 6H₂O (2)

Similarly, NO₂ is reduced to generate N₂.

In the deNOx catalyst, mercury is oxidized (halogenated) by HX as expressed by formula (3).

Hg + 1/2O₂ + 2HX → HgX₂ + H₂O (3)

In the present embodiment, as described below, the control section 32 controls the amount of NH₄X, NH₃, and HX in the flue gas such that NH₃ and HX are sufficient for the reactions of formulas (2), (3) and surplus NH₃ and HX are not sent to the downstream side.

The generated N₂ and HgX₂ are transferred into the wet-type desulfurization device 16 together with the flue gas through the air heater 14 and the particulate control device 15. In the case where all elemental mercury is not oxidized by the deNOx catalyst, the elemental mercury is transferred into the wet-type desulfurization device 16 in the gas state.

### (Desulfurization Step)

When an absorbent containing CaCO₃ or Ca(OH)₂ (generated by hydration of CaO) is sprayed into the wet-type desulfurization device 16, sulfur oxide reacts as expressed by formulas (4) to (6) to generate CaSO₄.

Ca(OH)₂ + SO₂ + 1/2H₂O → CaSO₃•1/2H₂O + H₂O (4)

CaCO₃ + SO₂ + 1/2H₂O → CaSO₃•1/2H₂O + CO₂ (5)

CaSO₃•1/2H₂O + 1/2O₂ + 3/2H₂O → CaSO₄•2H₂O (6)

HgX₂ in the flue gas is absorbed in the absorbent sprayed into the wet-type desulfurization device 16, and is removed from the flue gas.

HX which is not consumed by the reaction of formula (3) exists in the flue gas. Surplus HX is removed from the flue gas by a reaction of formula (7) in the wet-type desulfurization device 16.

CaCO₃ + 2HX → CaX₂ + H₂O + CO₂ (7)

(X: F, Cl, Br, I)

Lime or limestone contains MgO or MgCO₃ as impurities. MgO is also hydrated to form Mg(OH)₂, and Mg(OH)₂ and MgCO₃ are used for removing the sulfur oxide and the mercury by reactions similar to formulas (4) to (7).

The store section of the wet-type desulfurization device 16 stores an aqueous solution containing CaSO₄ CaX₂, MgSO₄, MgX₂ as reaction products in addition to CaCO₃ or Ca(OH)₂, and MgCO₃ or Mg(OH)₂ as absorbent components. A part of the stored aqueous solution is discharged from the wet-type desulfurization device 16 as the waste water, and is sent to the first separation section 19.

### (Separation Step)

The first separation section 19 separates hardly-soluble CaSO₄ in the solid state from the waste water. CaSO₄ is discharged to outside the flue gas treatment system 10. The waste water containing soluble components is stored in the waste water store section 20.

A part of the waste water stored in the waste water store section 20 is returned to the wet-type desulfurization device 16 by the pump 37. Another part of the waste water is sent to the water tank 23 of the ammonia component addition section 21 by the pump 38.

### (Ammonium Halide Generation Step)

In the ammonia component addition section 21, at least one of ammonium sulfate and ammonium carbonate as an ammonium salt is injected into the waste water in the water tank 23 from the silo 22. In the present embodiment, either one or both of ammonium sulfate and ammonium carbonate may be added to the waste water. CaX₂ contained in the waste water after separating CaSO₄ reacts with ammonium sulfate and ammonium carbonate as expressed by formulas (8) and (9), respectively. Similarly, MgCl₂ also reacts with ammonium sulfate and ammonium carbonate as expressed by formulas (8) and (9).

CaX₂ + (NH₄)₂SO₄ → CaSO₄ + 2NH₄X (8)

CaX₂ + (NH₄)₂CO₃ → CaCO₃ + 2NH₄X (9)

In the case where both of ammonium sulfate and ammonium carbonate are added, a mixture ratio can be arbitrarily set.

Here, the amount of the waste water to be supplied sent to the wet-type desulfurization device 16 from the waste water store section 20 is expressed by x, and the amount of the waste water to be supplied sent to the ammonia component addition section 21 from the waste water store section 20 is expressed by y. The total amount x + y of the waste water discharged from the waste water store section 20 is controlled to be constant. In the flue gas treatment system 10 of the present embodiment, the amount of halogen supplied to the ammonia component addition section 21 is expressed by a product of the amount to be supplied y and a measured value dₓ by the halogen concentration measurement section 31.

The control section 32 controls the amount of the ammonium salt to be added into the waste water in the water tank 23 by controlling an opening degree of the valve 35 based on the amount of the halogen. At this time, the amount of the ammonium salt to be added may be more than necessary to generate NH₄X. A specific control step will be described below.

The pH meter 24 measures pH of the waste water in the water tank 23. The pH of the waste water in the water tank 23 is kept to be 5 to 7. Accordingly, even if the surplus ammonium salt is added, ammonia vapor produced by decomposition of the ammonium salt is prevented from being volatilized to the upper part of the water tank 23.

### (Supply Step)

The waste water containing NH₄X, CaSO₄, CaCO₃, and the ammonium salt is sent to the second separation section 25 of the supply section 26 from the ammonia component addition section 21 via a pump 39. The second separation section 25 separates CaSO₄ and CaCO₃ in the solid state from the waste water. CaSO₄ and CaCO₃ are discharged to outside the flue gas treatment system 10.

The waste water containing NH₄X and the ammonium salt is stored in the water tank 27. The waste water containing the predetermined amount of NH₄X and the ammonium salt is sent from the water tank 27 to the spray section 12 by the pump 40 as the aqueous solution containing ammonium halide (NH₄X) in the above-described spray step.

As described above, in the present embodiment, the ammonium halide which is sprayed into the flue 11 so as to be used for treating the nitrogen oxides and the mercury is regenerated in the circulation section 18 and is sprayed again into the flue 11 from the spray section 12. In the flue gas treatment system 10 of the present embodiment, moisture content of CaSO₄ and CaCO₃ solids which have been separated by the first separation section 19 and the second separation section 25 contains halogen. Thus, in the present embodiment, it is not necessary to constantly supply ammonium halide from outside the system as the conventional technology, and it is only necessary to arbitrarily supply ammonium halide from outside the system so as to compensate the amount of halogen released to outside the system by delivering the moisture. Therefore, in the flue gas treatment system of the present embodiment, it is not necessary to drain a large amount of waste water to outside the system.

In addition, in the present embodiment, excessively added ammonium sulfate ((NH₄)₂SO₄) or ammonium carbonate ((NH₄)₂CO₃) is also sprayed into the flue 11 from the spray section 12. In the flue 11, the ammonium sulfate and the ammonium carbonate are decomposed as expressed by formulas (10) and (11) under a high-temperature atmosphere.

(NH₄)₂SO₄ → 2NH₃ + SO₃ + H₂O (10)

(NH₄)₂CO₃ → 2NH₃ + CO₂ + H₂O (11)

The NH₃ produced by the above reactions is subjected to the NOx reduction reaction of formula (2). The produced SO₃ can be removed from the flue gas by being condensed with the use of a heat recovery device placed between the air heater 14 and the particulate control device 15 or by spraying alkali reagent on the upstream side of the air heater 14 or the particulate control device 15.

Hereinafter, a method for controlling the amount of the aqueous ammonium halide solution to be supplied sprayed into the flue 11 will be described.

The NOx concentration measurement section 28 measures the nitrogen oxide concentration in the flue gas flowing into the flue gas treatment system 10 from the boiler 1. A value of the measured nitrogen oxide concentration is transmitted to the control section 32 as a signal.

The mercury concentration measurement section 29 measures the mercury concentration in the flue gas which has been treated in the wet-type desulfurization device 16. The mercury to be measured is elemental mercury and oxidized mercury Hg²⁺ in the gas phase. A value of the measured mercury concentration is transmitted to the control section 32 as a signal.

The NH₄X concentration measurement section 30 measures the NH₄⁺ concentration and the X⁻ concentration in the water tank 27. Values of the measured NH₄⁺ concentration and X⁻concentration are transmitted to the control section 32 as signals.

The halogen concentration measurement section 31 measures the halogen concentration in the waste water store section 20. A value of the measured halogen concentration is transmitted to the control section 32 as a signal.

The control section 32 compares the obtained values of the nitrogen oxide concentration and the mercury concentration with the respective set values. The set values are arbitrarily set based on requirement specifications of the flue gas treatment system 10.

The control section 32 obtains the amount (amount to be added A) of the ammonium salt to be added required for the reactions of formulas (8) and (9) based on the above-described concentration of halogen supplied to the ammonia component addition section 21 from the waste water store section 20.

Then, the control section 32 obtains the amount of ammonia required for the nitrogen oxide based on formula (2) from the measured nitrogen oxide concentration and NH₄⁺ concentration. The control section 32 obtains the amount (amount to be added B) of ammonium salt to be excessively added from the obtained amount of ammonia and the amount of NH₄X generated by the reactions of formulas (8) and (9).

Then, the control section 32 obtains the sum of the amount to be added A and the amount to be added B as the amount (amount to be added C) of the ammonium salt to be added injected from the silo 22. The control section 32 regulates an opening degree of the valve 35 such that the amount to be added C of the ammonium salt is injected into the water tank 23 from the silo 22.

The control section 32 determines the amount of the aqueous solution which is supplied to the spray section 12 from the supply section 26 to be sprayed into the flue 11 based on the measured NH₄⁺ concentration and X⁻ concentration, and formulas (1) to (3). The control section 32 controls the opening degree of the valve 36 so as to reach the determined amount of the solution.

When the nitrogen oxide concentration and the mercury concentration do not satisfy the set values due to variation of gas properties, the control section 32 controls the flue gas treatment system 10 as follows.
(A) In the case where both of the nitrogen oxide concentration and the mercury concentration are increased or decreased

The control section 32 obtains the amount of NH₄X needed to be sent to the spray section 12 from the supply section 26 and the amount of the ammonium salt based on the measured nitrogen oxide concentration, halogen concentration, and NH₄⁺ concentration, and formulas (1) to (3) and (8) to (11). As described above, the amount of NH₄X and the amount of the ammonium salt are obtained. The control section 32 regulates the opening degree of the valve 35 based on the obtained amount (amount to be added C) of the ammonium salt to be added injected from the silo 22.

The control section 32 determines the amount of the aqueous solution which is supplied to the spray section 12 from the supply section 26 to be sprayed into the flue 11 based on the measured NH₄⁺ concentration and X⁻ concentration, and formulas (1) to (3). The control section 32 controls the opening degree of the valve 36 so as to reach the determined amount of the aqueous solution.
(B) In the case where the mercury concentration is varied and the nitrogen oxide concentration is not varied

The control section 32 controls opening degrees of the valves 33 and 34 when the obtained mercury concentration is varied from the set value and the obtained nitrogen oxide concentration is not varied from the set value.

In the case where the mercury concentration measured by the mercury concentration measurement section 29 is increased, the control section 32 decreases the opening degree of the valve 33 and increases the opening degree of the valve 34. The opening degrees of the valves 33 and 34 are set by the measured halogen concentration and mercury concentration. According to the operation, the amount of halogen to be supplied to the ammonia component addition section 21 is increased.

The control section 32 obtains the amount of NH₄X needed to be sent to the spray section 12 from the supply section 26 and the amount (amount to be added C) of the ammonium salt based on the measured nitrogen oxide concentration, halogen concentration, and NH₄⁺ concentration, and formulas (1) to (3) and (8) to (11). As described above, the amount of NH₄X and the amount of the ammonium salt are obtained. The control section 32 regulates the opening degree of the valve 35 based on the obtained amount (amount to be added C) of the ammonium salt to be added injected from the silo 22.

As described above, the control section 32 determines the amount of the aqueous solution which is supplied to the spray section 12 from the supply section 26 to be sprayed into the flue 11. The control section 32 controls the opening degree of the valve 36 so as to reach the determined amount of the aqueous solution.

According to the operation, the amount of NH₄X generated in the ammonia component addition section 21 is increased, and the surplus amount of the ammonium salt is decreased. That is, the NH₄⁺ concentration in the aqueous solution which is sent to the spray section 12 from the supply section 26 remains constant and the amount of NH₄X is increased.

In the case where the mercury concentration measured by the mercury concentration measurement section 29 is decreased, the control section 32 increases the opening degree of the valve 33 and decreases the opening degree of the valve 34. The opening degrees of the valves 33 and 34 are set by the measured halogen concentration and mercury concentration. According to the operation, the amount of halogen to be supplied to the ammonia component addition section 21 is decreased.

The control section 32 obtains the amount of NH₄X needed to be sent to the spray section 12 from the supply section 26 and the amount (amount to be added C) of the ammonium salt based on the measured nitrogen oxide concentration, halogen concentration, and NH₄⁺ concentration, and formulas (1) to (3) and (8) to (11). As described above, the amount of NH₄X and the amount of the ammonium salt are obtained. The control section 32 regulates the opening degree of the valve 35 based on the obtained amount (amount to be added C) of the ammonium salt to be added injected from the silo 22.

As described above, the control section 32 determines the amount of the aqueous solution which is supplied to the spray section 12 from the supply section 26 to be sprayed into the flue 11. The control section 32 regulates the opening degree of the valve 36 so as to reach the determined amount of the aqueous solution.

According to the operation, the NH₄⁺ concentration in the aqueous solution which is sent to the spray section 12 from the supply section 26 remains constant and the amount of NH₄X is decreased.
(C) In the case where the nitrogen oxide concentration is increased and the mercury concentration is not varied

The control section 32 increases the opening degree of the valve 35 when the obtained nitrogen oxide concentration is increased compared to the set value and the mercury concentration is not varied. Accordingly, the surplus amount of the ammonium salt to be injected into the water tank 23 is increased. In this case, the amount (amount to be added C) of the ammonium salt to be added is obtained based on the measured nitrogen oxide concentration, halogen concentration, and NH₄⁺ concentration, and formulas (1) to (3) and (8) to (11), as described above. The control section 32 regulates the opening degree of the valve 35 based on the amount to be added C.

According to the operation, the amount of NH₄X in the aqueous solution which is sent to the spray section 12 from the supply section 26 remains constant and the NH₄⁺ concentration is increased.

When the nitrogen oxide concentration is decreased after increasing the opening degree of the valve 35, the control section 32 decreases the opening degree of the valve 35.
(D) In the case where the nitrogen oxide concentration is decreased and the mercury concentration is not varied

The control section 32 obtains the amount to be added A, the amount to be added B, and the amount to be added C as described above when the obtained nitrogen oxide concentration is decreased compared to the set value and the mercury concentration is not varied.

In the case where the amount to be added B is a positive value or 0, the control section 32 regulates the opening degree of the valve 35 such that the amount to be added C of the ammonium salt is injected into the water tank 23 from the silo 22. The control section 32 regulates the opening degree of the valve 36 so as to reach the amount of the aqueous solution determined based on the measured NH₄⁺ concentration and X⁻ concentration, and formulas (1) to (3).

In the case where the amount to be added B is a negative value, when the amount to be added A of the ammonium salt is added, the amount of ammonia more than necessary for the reaction of formula (2) is supplied to the flue 11. In this case, the control section 32 closes the valve 36 and stops spraying the aqueous solution from the spray section 12.

### {Reference Signs List}

- 1: boiler
- 2: smokestack
- 10: flue gas treatment system
- 11: flue
- 12: spray section
- 13: deNOx device
- 14: air heater
- 15: particulate control device
- 16: wet-type desulfurization device
- 17: supersaturation measurement device
- 18: circulation section
- 19: first separation section
- 20: waste water store section
- 21: ammonia component addition section
- 22: silo
- 23, 27: water tank
- 24: pH meter
- 25: second separation section
- 26: supply section
- 28: NOx concentration measurement section
- 29: mercury concentration measurement section
- 30: NH₄X concentration measurement section
- 31: halogen concentration measurement section
- 32: control section
- 33, 34, 35, 36: valve

## Claims

1. A flue gas treatment system (10) for removing nitrogen oxide and mercury contained in flue gas from a boiler (1), the flue gas treatment system comprising:
a spray section (12) adapted to spray an aqueous solution containing ammonium halide into a flue (11) through which the flue gas discharged from the boiler flows;
a deNOx section (13) placed on a gas downstream side of the flue and adapted to reduce the nitrogen oxide with ammonia generated from the ammonium halide and to oxidize the mercury with hydrogen halide generated from the ammonium halide;
a desulfurization section (16) placed on a gas downstream side of the deNOx section and adapted to remove sulfur oxide contained in the flue gas and to remove the oxidized mercury from the flue gas by using an absorbent containing alkali compounds;
a separation section (19) adapted to receive waste water containing calcium sulfate and calcium halide from the desulfurization section and to separate the calcium sulfate from the waste water;
an ammonia component addition section (21) adapted to add an ammonium salt which is at least one of ammonium sulfate and ammonium carbonate to the waste water containing the calcium halide discharged from the separation section to generate the ammonium halide; and
a supply section (26) adapted to send the waste water containing the ammonium halide discharged from the ammonia component addition section to the spray section as the aqueous solution.

2. The flue gas treatment system according to claim 1, wherein the aqueous solution contains the ammonium salt.

3. The flue gas treatment system according to claim 1 comprising:
a first concentration measurement section (28) adapted to measure a concentration of the nitrogen oxide in the flue gas on a gas upstream side of the spray section;
a second concentration measurement section (29) adapted to measure a concentration of the mercury in the flue gas on the gas downstream side of the desulfurization section;
a third concentration measurement section (30) adapted to measure a first halogen concentration which is a concentration of halogen and a concentration of ammonium in the waste water sent to the spray section from the supply section;
a waste water store section (20) placed between the separation section and the ammonia component addition section, connected to the desulfurization section, and adapted to store the waste water discharged from the separation section;
a fourth concentration measurement section (31) adapted to measure a second halogen concentration which is a concentration of halogen in the waste water stored in the waste water store section; and
a control section (32) connected to the first concentration measurement section, the second concentration measurement section, the third concentration measurement section, and the fourth concentration measurement section, and adapted to regulate an amount of the ammonium to be generated and an amount of the hydrogen halide to be generated based on the concentration of the nitrogen oxide, the concentration of the mercury, the concentration of the ammonium, the first halogen concentration, and the second halogen concentration measured.

4. A flue gas treatment method for removing nitrogen oxide and mercury contained in flue gas from a boiler, the flue gas treatment method comprising:
a spray step for spraying an aqueous solution containing ammonium halide into a flue through which the flue gas discharged from the boiler flows;
an oxidation-reduction step for reducing the nitrogen oxide with ammonia generated from the ammonium halide and oxidizing the mercury with hydrogen halide generated from the ammonium halide;
a desulfurization step for generating calcium sulfate and calcium halide by a reaction among an absorbent containing alkali compounds, sulfur oxide contained in the flue gas, and the hydrogen halide and for removing the oxidized mercury from the flue gas by the absorbent;
a separation step for separating the calcium sulfate from waste water containing the calcium sulfate and the calcium halide which are generated in the desulfurization step;
an ammonium halide generation step for generating the ammonium halide by adding an ammonium salt which is at least one of ammonium sulfate and ammonium carbonate to the waste water from which the calcium sulfate is separated in the separation step; and
a supply step for sending the waste water containing the ammonium halide as the aqueous solution.

5. The flue gas treatment method according to claim 4, wherein the aqueous solution contains the ammonium salt.

6. The flue gas treatment method according to claim 4 further comprising:
a first concentration measurement step for measuring a concentration of the nitrogen oxide in the flue gas before spraying the aqueous solution;
a second concentration measurement step for measuring a concentration of the mercury in the flue gas after the desulfurization step;
a third concentration measurement step for measuring a first halogen concentration which is a concentration of halogen and a concentration of ammonium in the waste water which is sent in the supply step; and
a fourth concentration measurement step for measuring a second halogen concentration which is a concentration of halogen in the waste water from which the calcium sulfate is separated in the separation step, wherein
an amount of the ammonium to be generated and an amount of the hydrogen halide to be generated are regulated based on the concentration of the nitrogen oxide, the concentration of the mercury, the concentration of the ammonium, the first halogen concentration, and the second halogen concentration measured.

7. The flue gas treatment method according to claim 6, wherein
an amount of the aqueous solution to be supplied in the supply step is increased or decreased based on the first halogen concentration and the concentration of the ammonium in accordance with variations in the concentration of the nitrogen oxide and the concentration of the mercury.

8. The flue gas treatment method according to claim 6, wherein
an amount of the ammonium salt to be added is increased or decreased in accordance with variations in the concentration of the nitrogen oxide and the concentration of the mercury.

9. The flue gas treatment method according to claim 6, wherein
an amount of the waste water to be supplied from the separation step to the ammonium halide generation step is varied based on the second halogen concentration in accordance with variations in the concentration of the nitrogen oxide and the concentration of the mercury.

## Patentansprüche

1. Abgasbehandlungssystem (10) zum Entfernen von Stickstoffoxid und Quecksilber, die im Abgas eines Heizkessels (1) enthalten sind, wobei das Abgasbehandlungssystem aufweist:
einen Sprühabschnitt (12), der dazu geeignet ist, eine wässrige Lösung, die ein Ammoniumhalogenid enthält, in einen Abgaskanal (11) zu sprühen, durch das das vom Heizkessel ausgegebene Abgas strömt;
einen deNOx-Abschnitt (13), der gasstromabwärtsseitig vom Abgaskanal angeordnet und dazu geeignet ist, das Stickstoffoxid mit vom Ammoniumhalogenid erzeugtem Ammonium zu reduzieren und das Quecksilber mit vom Ammoniumhalogenid erzeugtem Wasserstoffhalogenid zu oxidieren;
einen Entschwefelungsabschnitt (16), der gasstromabwärtsseitig vom deNOx-Abschnitt angeordnet und dazu geeignet ist, unter Verwendung eines Alkaliverbindungen enthaltenden Absorptionsmittels im Abgas enthaltenes Schwefeloxid zu entfernen und das oxidierte Quecksilber vom Abgas zu entfernen;
einen Trennabschnitt (19), der dazu geeignet ist, Abwasser, das Calciumsulfat und Calciumhalogenid enthält, vom Entschwefelungsabschnitt zu empfangen und das Calciumsulfat vom Abwasser zu trennen;
einen Ammoniakkomponentenzugabeabschnitt (21), der dazu geeignet ist, dem vom Trennabschnitt ausgegebenen Abwasser, das das Calciumhalogenid enthält, ein Ammoniumsalz zuzugeben, das ein Ammoniumsulfat und/oder ein Ammoniumcarbonat ist, um das Ammoniumhalogenid zu erzeugen; und
einen Zufuhrabschnitt (26), der dazu geeignet ist, das vom Ammoniakkomponentenzugabeabschnitt ausgegebene Abwasser, das das Ammoniumhalogenid enthält, dem Sprühabschnitt als wässrige Lösung zuzuführen.

2. Abgasbehandlungssystem nach Anspruch 1, wobei die wässrige Lösung das Ammoniumsalz enthält.

3. Abgasbehandlungssystem nach Anspruch 1, mit:
einem ersten Konzentrationsmessabschnitt (28), der dazu geeignet ist, eine Konzentration des Stickstoffoxids im Abgas gasstromaufwärtsseitig vom Sprühabschnitt zu messen;
einem zweiten Konzentrationsmessabschnitt (29), der dazu geeignet ist, eine Konzentration des Quecksilbers im Abgas gasstromabwärtsseitig vom Entschwefelungsabschnitt zu messen;
einem dritten Konzentrationsmessabschnitt (30), der dazu geeignet ist, eine erste Halogenkonzentration zu messen, die eine Konzentration von Halogen und eine Konzentration von Ammonium im Abwasser ist, das dem Sprühabschnitt vom Zufuhrabschnitt zugeführt wird;
einem Abwasserspeicherabschnitt (20), der zwischen dem Trennabschnitt und dem Ammoniakkomponentenzugabeabschnitt angeordnet ist, mit dem Entschwefelungsabschnitt verbunden und dazu geeignet ist, das vom Trennabschnitt ausgegebene Abwasser zu speichern;
einem vierten Konzentrationsmessabschnitt (31), der dazu geeignet ist, eine zweite Halogenkonzentration zu messen, die eine Konzentration von Halogen im im Abwasserspeicherabschnitt gespeicherten Abwasser ist; und
einem Steuerabschnitt (32), der mit dem ersten Konzentrationsmessabschnitt, dem zweiten Konzentrationsmessabschnitt, dem dritten Konzentrationsmessabschnitt und dem vierten Konzentrationsmessabschnitt verbunden und dazu geeignet ist, eine Menge des zu erzeugenden Ammoniums und eine Menge des zu erzeugenden Wasserstoffhalogenids basierend auf der gemessenen Konzentration des Stickstoffoxids, der gemessenen Konzentration des Quecksilbers, der gemessenen Konzentration des Ammoniums, der gemessenen ersten Halogenkonzentration und der gemessenen zweiten Halogenkonzentration zu regeln.

4. Abgasbehandlungsverfahren zum Entfernen von Stickstoffoxid und Quecksilber, die im Abgas eines Heizkessels enthalten sind, wobei das Abgasbehandlungsverfahren aufweist:
einen Sprühschritt (12) zum Sprühen einer wässrigen Lösung, die ein Ammoniumhalogenid enthält, in einen Abgaskanal (11), durch das das vom Heizkessel abströmende Abgas strömt;
einen Oxidations-Reduktionsschritt zum Reduzieren des Stickstoffoxids mit vom Ammoniumhalogenid erzeugtem Ammoniak und zum Oxidieren des Quecksilbers mit vom Ammoniumhalogenid erzeugtem Wasserstoffhalogenid;
einen Entschwefelungsschritt zum Erzeugen von Calciumsulfat und Calciumhalogenid durch eine Reaktion zwischen einem Absorptionsmittel, das Alkaliverbindungen enthält, im Abgas enthaltenem Schwefeloxid und dem Wasserstoffhalogenid und zum Entfernen des oxidierten Quecksilbers vom Abgas durch das Absorptionsmittel;
einen Trennschritt zum Trennen des Calciumsulfats vom Abwasser, das das Calciumsulfat und das Calciumhalogenid enthält, die im Entschwefelungsschritt erzeugt werden;
einen Ammoniumhalogeniderzeugungsschritt zum Erzeugen des Ammoniumhalogenids durch Zugabe eines Ammoniumsalzes, das Ammoniumsulfat und/oder Ammoniumcarbonat ist, zum Abwasser, von dem das Calciumsulfat im Trennschritt getrennt worden ist; und
einen Zufuhrschritt zum Zuführen des Abwassers, das das Ammoniumhalogenid enthält, als die wässrige Lösung.

5. Abgasbehandlungsverfahren nach Anspruch 4, wobei die wässrige Lösung das Ammoniumsalz enthält.

6. Abgasbehandlungsverfahren nach Anspruch 4, ferner mit:
einem ersten Konzentrationsmessschritt zum Messen einer Konzentration des Stickstoffoxids im Abgas vor dem Sprühen der wässrigen Lösung;
einem zweiten Konzentrationsmessschritt zum Messen einer Konzentration des Quecksilbers im Abgas nach dem Entschwefelungsschritt;
einem dritten Konzentrationsmessschritt zum Messen einer ersten Halogenkonzentration, die eine Konzentration von Halogen und eine Konzentration von Ammonium im Abwasser ist, das im Zufuhrschritt zugeführt wird; und
einem vierten Konzentrationsmessschritt zum Messen einer zweiten Halogenkonzentration, die eine Konzentration von Halogen im Abwasser ist, von dem das Calciumsulfat im Trennschritt getrennt worden ist, wobei
eine Menge des zu erzeugenden Ammoniums und eine Menge des zu erzeugenden Wasserstoffhalogenids basierend auf der gemessenen Konzentration des Stickstoffoxids, der gemessenen Konzentration des Quecksilbers, der gemessenen Konzentration des Ammoniums, der gemessenen ersten Halogenkonzentration und der gemessenen zweiten Halogenkonzentration geregelt werden.

7. Abgasbehandlungsverfahren nach Anspruch 6, wobei
eine Menge der im Zufuhrschritt zuzuführenden wässrigen Lösung basierend auf der ersten Halogenkonzentration und der Konzentration des Ammoniums gemäß Änderungen der Konzentration des Stickstoffoxids und der Konzentration des Quecksilbers erhöht oder vermindert wird.

8. Abgasbehandlungsverfahren nach Anspruch 6, wobei
eine Menge des zuzugebenden Ammoniumsalzes gemäß Änderungen der Konzentration des Stickstoffoxids und der Konzentration des Quecksilbers erhöht oder vermindert wird.

9. Abgasbehandlungsverfahren nach Anspruch 6, wobei
eine Menge des vom Trennschritt zum Ammoniumhalogeniderzeugungsschritt zuzuführenden Abwassers basierend auf der zweiten Halogenkonzentration gemäß Änderungen der Konzentration des Stickstoffoxids und der Konzentration des Quecksilbers geändert wird.

## Revendications

1. Système de traitement de gaz de combustion (10) pour enlever l'oxyde d'azote et le mercure contenus dans les gaz de combustion en provenance d'une chaudière (1), le système de traitement de gaz de combustion comprenant :
une section de pulvérisation (12) adaptée pour pulvériser une solution aqueuse contenant de l'halogénure d'ammonium à l'intérieur d'un conduit (11) par l'intermédiaire duquel les gaz de combustion déchargés depuis la chaudière s'écoulent ;
une section d'enlèvement de NOx (13) placée sur un côté aval des gaz du conduit et adaptée pour réduire l'oxyde d'azote à l'aide de l'ammoniac généré à partir de l'halogénure d'ammonium et pour oxyder le mercure à l'aide de l'halogénure d'hydrogène généré à partir de l'halogénure d'ammonium ;
une section de désulfuration (16) placée sur un côté aval des gaz de la section d'enlèvement de NOx et adaptée pour enlever l'oxyde de soufre contenu dans le gaz de combustion et pour enlever le mercure oxydé des gaz de combustion en utilisant un absorbant contenant des composés alcalins ;
une section de séparation (19) adaptée pour recevoir de l'eau résiduaire contenant du sulfate de calcium et de l'halogénure de calcium en provenance de la section de désulfuration et pour séparer le sulfate de calcium de l'eau résiduaire ;
une section d'ajout de composant ammoniac (21) adaptée pour ajouter un sel d'ammonium, qui est au moins parmi le sulfate d'ammonium et le carbonate d'ammonium, à l'eau résiduaire contenant l'halogénure de calcium et déchargée depuis la section de séparation de manière à générer l'halogénure d'ammonium ; et
une section d'alimentation (26) adaptée pour envoyer l'eau résiduaire contenant l'halogénure d'ammonium déchargé depuis la section d'ajout de composant ammoniac jusqu'à la section de pulvérisation en tant que solution aqueuse.

2. Système de traitement de gaz de combustion selon la revendication 1, dans lequel la solution aqueuse contient le sel d'ammonium.

3. Système de traitement de gaz de combustion selon la revendication 1, comprenant :
une première section de mesure de concentration (28) adaptée pour mesurer une concentration de l'oxyde d'azote dans les gaz de combustion sur un côté amont des gaz de la section de pulvérisation ;
une deuxième section de mesure de concentration (29) adaptée pour mesurer une concentration du mercure dans les gaz de combustion sur le côté aval des gaz de la section de désulfuration ;
une troisième section de mesure de concentration (30) adaptée pour mesurer une première concentration d'halogène une concentration d'halogène et une concentration d'ammonium dans l'eau résiduaire envoyée jusqu'à la section de pulvérisation depuis la section d'alimentation ;
une section de stockage d'eau résiduaire (20) placée entre la section de séparation et la section d'ajout de composant ammoniac, connectée à la section de désulfuration, et adaptée pour stocker l'eau résiduaire déchargée depuis la section de séparation ;
une quatrième section de mesure de concentration (31) adaptée pour mesurer une seconde concentration d'halogène une concentration d'halogène dans l'eau résiduaire stockée dans la section de stockage d'eau résiduaire ; et
une section de commande (32) connectée à la première section de mesure de concentration, à la deuxième section de mesure de concentration, à la troisième section de mesure de concentration et à la quatrième section de mesure de concentration, et adaptée pour réguler une quantité de l'ammonium destiné à être généré et une quantité de l'halogénure d'hydrogène destiné à être généré sur la base de la concentration de l'oxyde d'azote, de la concentration du mercure, de la concentration de l'ammonium, de la première concentration d'halogène et de la seconde concentration d'halogène mesurées.

4. Procédé de traitement de gaz de combustion pour enlever l'oxyde d'azote et le mercure contenus dans les gaz de combustion en provenance d'une chaudière, le procédé de traitement de gaz de combustion comprenant :
une étape de pulvérisation pour pulvériser une solution aqueuse contenant de l'halogénure d'ammonium à l'intérieur d'un conduit par l'intermédiaire duquel les gaz de combustion déchargés depuis la chaudière s'écoulent ;
une étape d'oxydation-réduction pour réduire l'oxyde d'azote à l'aide de l'ammoniac généré à partir de l'halogénure d'ammonium et pour oxyder le mercure à l'aide de l'halogénure d'hydrogène généré à partir de l'halogénure d'ammonium ;
une étape de désulfuration pour générer du sulfate de calcium et de l'halogénure de calcium au moyen d'une réaction entre un absorbant contenant des composés alcalins, l'oxyde de soufre contenu dans les gaz de combustion et l'halogénure d'hydrogène et pour enlever le mercure oxydé des gaz de combustion au moyen de l'absorbant ;
une étape de séparation pour séparer le sulfate de calcium de l'eau résiduaire contenant le sulfate de calcium et l'halogénure de calcium qui sont générés lors de l'étape de désulfuration ;
une étape de génération d'halogénure d'ammonium pour générer l'halogénure d'ammonium en ajoutant un sel d'ammonium qui est au moins parmi le sulfate d'ammonium et le carbonate d'ammonium à l'eau résiduaire de laquelle le sulfate de calcium est séparé lors de l'étape de séparation ; et
une étape d'alimentation pour envoyer l'eau résiduaire contenant l'halogénure d'ammonium en tant que solution aqueuse.

5. Procédé de traitement de gaz de combustion selon la revendication 4, dans lequel la solution aqueuse contient le sel d'ammonium.

6. Procédé de traitement de gaz de combustion selon la revendication 4, comprenant en outre :
une première étape de mesure de concentration pour mesurer une concentration de l'oxyde d'azote dans les gaz de combustion avant la pulvérisation de la solution aqueuse ;
une deuxième étape de mesure de concentration pour mesurer une concentration du mercure dans les gaz de combustion après l'étape de désulfuration ;
une troisième étape de mesure de concentration pour mesurer une première concentration d'halogène une concentration d'halogène et une concentration d'ammonium dans l'eau résiduaire envoyée lors de l'étape d'alimentation ; et
une quatrième étape de mesure de concentration pour mesurer une seconde concentration d'halogène une concentration d'halogène dans l'eau résiduaire de laquelle le sulfate de calcium est séparé lors de l'étape de séparation ; dans lequel :
une quantité de l'ammonium destiné à être généré et une quantité de l'halogénure d'hydrogène destiné à être généré sont régulées sur la base de la concentration de l'oxyde d'azote, de la concentration du mercure, de la concentration de l'ammonium, de la première concentration d'halogène et de la seconde concentration d'halogène mesurées.

7. Procédé de traitement de gaz de combustion selon la revendication 6, dans lequel :
une quantité de la solution aqueuse destinée à être alimentée lors de l'étape d'alimentation est augmentée ou diminuée sur la base de la première concentration d'halogène et de la concentration de l'ammonium conformément à des variations de la concentration de l'oxyde d'azote et de la concentration du mercure.

8. Procédé de traitement de gaz de combustion selon la revendication 6, dans lequel :
une quantité du sel d'ammonium destiné à être ajouté est augmentée ou diminuée en fonction de variations de la concentration de l'oxyde d'azote et de la concentration du mercure.

9. Procédé de traitement de gaz de combustion selon la revendication 6, dans lequel :
une quantité de l'eau résiduaire destinée à être alimentée depuis l'étape de séparation jusqu'à l'étape de génération d'halogénure d'ammonium est modifiée sur la base de la seconde concentration d'halogène conformément à des variations de la concentration de l'oxyde d'azote et de la concentration du mercure.
